(19) Europäisches Patentamt
European Patent Office
Office européen des brevets

(11) Publication number: 0 025 720
B1

(12) # EUROPEAN PATENT SPECIFICATION

(45) Date of publication of patent specification: 26.02.86

(51) Int. Cl.[4]: C 07 F 9/12, C 08 L 27/06, C 08 K 5/52

(21) Application number: 80303252.3

(22) Date of filing: 16.09.80

(54) **Process for the manufacture of mixed phosphoric acid ester compositions and plasticised polymers containing them.**

(30) Priority: 17.09.79 US 76099
18.06.80 US 160786

(43) Date of publication of application:
25.03.81 Bulletin 81/12

(45) Publication of the grant of the patent:
26.02.86 Bulletin 86/09

(84) Designated Contracting States:
BE DE FR GB IT NL

(56) References cited:
EP-A-0 000 240
PL-A-78 616
US-A-2 504 121
US-A-2 557 090
US-A-2 557 091
US-A-3 363 033
US-A-3 576 923
US-A-3 976 616
US-A-4 034 023

(73) Proprietor: FMC Corporation
2000 Market Street
Philadelphia Pennsylvania 19103 (US)

(72) Inventor: Beacham, Harry Hoyt
2620 Arrowhead Drive
Langhorne Pennsylvania 19067 (US)
Inventor: Gunkel, Louis Thomas
51 Breece Drive
Yardley Pennsylvania 19067 (US)
Inventor: Hamilton, James Paul
10 Vander Veer Drive
Trenton New Jersey 08638 (US)

(74) Representative: Taylor, Phillip Kenneth et al
W.P. THOMPSON & CO. Coopers Building
Church Street
Liverpool L1 3AB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 025 720 B1

**Description**

This invention relates to an improved commercial process for the production of mixed phosphoric acid ester compositions containing substantial amounts of the compounds:

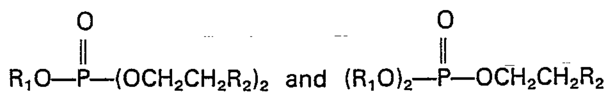

wherein $R_1$ is the same or a different radical selected from phenyl and substituted phenyl radicals and $R_2$ is the same or a different aliphatic radical containing from 2 to 16 carbon atoms selected from alkyl and alkoxy radicals; and to polyvinyl chloride plasticised therewith. The mixed phosphoric acid ester compositions prepared by the novel process of the present invention contains at least 10 weight percent of the compound:

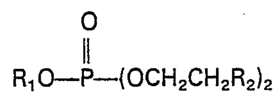

wherein $R_1$ and $R_2$ are the radicals defined above and are vacuum distilled to give nearly colorless liquids. These mixed ester compositions have exceptional utility as flexibilizing plasticizers for polyvinyl chloride compositions, imparting to such compositions flexibility at −15°C to −35°C when used as the sole plasticizer in a polyvinyl chloride composition at 50 parts per hundred. Scuh plasticized polyvinyl chloride compositions also offer the advantages of non-inflammability, low loss of plasticizer at higher temperatures (low volatility) and reduced smoke formation upon burning.

When the mixed phosphoric acid ester compositions of the present invention are used as a plasticizer for vinyl chloride polymers, it is to be emphasized that the large number of different phosphate ester species that are present in the plasticizer composition provides an exceptional advantage in that the resulting plasticized vinyl chloride polymers are heat stable to milling and fabrication, while maintaining low temperature flexibility in the range of −15°C to −35°C when used as the sole plasticizer at 50 parts per hundred.

Various methods are known for the production of mixed phosphoric acid ester compositions, however, few of the processes described in the art have proven to be commercially feasible. Very large amounts of mixed aryl esters of phosphoric acid have been made by the process taught in US—A—3 576 923 wherein phenol is alkylated in the presence of a Friedel-Crafts catalyst and the whole of the product resulting from the alkylation of the phenol is treated with phosphorus oxychloride. The resulting product is a mixed phosphate ester wherein the substituents on the phosphorus atoms are phenols and substituted phenols (generally $C_3$—$C_4$ substituted phenols). The process to be described may give a much more complex ester mixture containing different ester species wherein the substituents on the phosphorus atom are derived from aliphatic alcohols, and alkoxyalcohols containing 2 to 16 carbon atoms in addition to phenols and substituted phenols.

The manufacture of alkyl aryl phosphate esters is also known but the process employed to obtain such products is directed to esters of high purity containing a single species. A common procedure described is that of reacting 2 moles of phenol or similar hydroxy aryl compound with 1 mole of phosphorus oxychloride, removing the HCl formed under vacuum, and then reacting the diphenyl phosphoryl chloride with 1 mole of an aliphatic alcohol. This procedure is objectionable as the initial phosphorylation reaction is difficult to control and excessive quantities of the triaryl derivatives are formed, necessitating distillation of a highly corrosive mixture of phosphoryl chlorides. Another procedure described is that of preparing the triaryl phosphates, removing one aryl group by alkaline hydrolysis followed by steam distillation and then introducing the alkyl group. The principal objectionable feature of this process is that it is exceedingly costly in view of the increased number of steps required to produce the finished product. A further method described is that of reacting in excess of 1 mnole of an aliphatic alcohol with 1 mole of phosphorus oxychloride, removing the HCl formed under vacuum, purifying the monoalkyl phosphoryl dichloride by distillation and subsequently reacting at a relatively high temperature the purified acid chloride with 2 moles of phenol or similar hydroxy aryl compound. According to this latter process, in order to obtain pure neutral phosphate esters, it is essential that the intermediate alkyl phosphoryl dichloride be separated from the reaction mixture and purified. This is accomplished by fractional distillation of the acid chloride from the reaction mass. Pure esters may also be obtained by fractionating the crude neutral phosphate esters. This process has given satisfactory results when the aliphatic alcohol used was a primary alcohol of relatively short chain length. However, it is known that secondary, tertiary, and substituted alcohols are not suited to this reaction. Typical alcohols which do not satisfactorily undergo the reaction as described are the allyl or substituted allyl alcohols, nitro alcohols, secondary butyl alcohol, benzyl alcohol and 2-octanol. Moreover, it has been found that monoalkyl phosphoryl dichlorides tend to decompose with such decomposition being dependent upon time and temperature. In the case of the lower alkyl phosphoryl dichlorides, such as the $C_1$—$C_4$ alkyl phosphoryl dichlorides, the boiling points of the compositions are

lower than their respective decomposition temperature range under commercially practical subatmospheric pressure thereby permitting purification of the monoalkyl phosphoryl dichloride by fractionation. However, the decomposition temperature ranges of the higher molecular weight monoalkyl phosphoryl dichlorides which are intermediate to the formation of the monoalkyl diaryl phosphate esters that may be present in the mixed ester composition prepared by this process are lower than their respective boiling points that could be obtained under commercially feasible subatmospheric pressures, thus rendering purification of the intermediate monoalkyl phosphoryl dichlorides by commercial fractionation impossible. Furthermore, if purified intermediate alkyl phosphoryl dichlorides are obtained and subsequently reacted with hydroxy aryl compounds to form monoalkyl diaryl phosphates, the relatively high temperatures required to cause the reaction to proceed essentially quantitatively are again higher than the decomposition temperature ranges of the respective alkyl phosphoryl dichlorides and consequently decomposition again results.

A process for the manufacture of monoalkyl diaryl phosphate ester wherein the single alkyl group may contain from 6 to 18 carbon atoms and may be a beta-alkoxy-ethyl radical of 4 to 18 carbon atoms is described in US—A—2 504 121 and US—A—2 557 090 (alkyl group may contain 4—12 carbon atoms). Both patents, however, are directed to the preparation of pure monoalkyl diaryl phosphate esters. This process involves reaction of phosphorus oxychloride with one mole of an alcohol to yield a monophosphoryl dichloride, which is then reacted with two moles of a sodium phenate. This yields a product of high purity which is not as effective a plasticizer as the complex mixture of products that result from the present invention. Further, this method produces large quantities of sodium salts which are difficult to remove and dispose of. In addition, the side reaction of alkyl phosphoryl dichloride with alcohol produces substantial quantities of alkyl halide as a by-product.

The recently issued (1975) L—A—78 616 describes the transesterification of a triaryl phosphate with an aliphatic alcohol containing 6—12 carbon atoms in its molecule in the presence of 0.25—12 parts of sodium or potassium by weight at a temperature of 20°C—200°C for 1—10 hours, wherein the weight ratio of triaryl phosphate to alcohol may vary between 100:40 and 100:200. This patent states that its object is to avoid the disadvantages of the prior art method in which arylalkylphosphates were obtained by direct esterification of chloroarylphosphates with aliphatic alcohols in the presence of agents which bond hydrogen chloride in organic solvents. The disadvantages of the known method are stated to be the necessity of using organic solvents and agents for bonding hydrogen chloride and the necessity of using an additional method for eliminating the hydrogen chloride waste product from the reaction medium, which result in the product being a mixture of arylalkylphosphate esterified to different extents. The principal advantage claimed in the Polish Patent is stated to be the production of a product of substantially greater purity. In the sole example the aliphatic alcohol is 2-ethylhexanol.

The transesterification of tertiary alkyl phosphates by heating with alcohols having a higher molecular weight radical than that present in the ester is also known. In the presence fo a stoichiometric amount of sodium alkoxide, the reaction results in mixtures of mono- and di-exchange products in rather poor yields. Substantial quantities of ether are formed with the alkoxide and are present in the reaction mixture.

Mixed phosphoric acid ester compositions containing phenyl and substituted phenyl groups attached to the phosphorus atom through an oxygen linkage are known and are described in US—A—3 576 923 (referred to above) and US—A—3 553 155. Alkoxy diaryl phosphates are also known and are described in US—A—2 557 090 (referred to above and US-A-2 557 091. The patents referred to above mention that certain phosphate esters are useful as plasticizers for vinyl chloride polymers.

EP—A—0 000 240 discloses phosphate acid ester compositions containing diaryl alkyl phosphate, dialkyl aryl phosphate and triaryl phosphate which are useful for plasticizing polyvinyl chloride. However the minimum amount of the triaryl phosphate is 20% by weight of the composition whereas the mixture of products in the present invention contains no more than 4% by weight of triaryl phosphate. No commercial method for the manufacture of phosphate compositions containing substantial amounts of compounds having the formulae:

$$R_1O—\overset{\overset{\displaystyle O}{\|}}{P}—(OCH_2CH_2R_2)_2 \quad \text{and} \quad (R_1O)_2—\overset{\overset{\displaystyle O}{\|}}{P}—OCH_2CH_2R_2$$

wherein $R_1$ is the same or a different radical selected from phenyl and substituted phenyl radicals and $R_2$ is the same or a different aliphatic radical containing from 2 to 16 carbon atoms selected from alkyl and alkoxy radicals was known prior to the present invention.

First, the prior art teaches that a higher radical than that present in the ester was required for transesterification to occur. Secondly, the prior art does not suggest that the dialkyl aryl phosphate in the mixture prepared by transesterification would be present in amounts of at least 10 weight percent. And thirdly, the prior art states that substantial amounts of ether by-products are always produced by exchange esterification of tertiary phosphates whereas such products are not produced by the process of this invention.

According to the present invention a process for the manufacture of a mixed phosphoric acid ester

composition is provided characterised by reacting in an anhydrous system at a temperature of up to 100°C and in the presence of a catalytic amount of sodium, an ester of phosphoric acid having the formula:

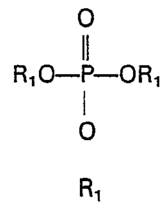

with an aliphatic alcohol having the formula $R_2CH_2CH_2OH$ wherein $R_1$ may be the same or a different radical selected from phenyl radicals and substituted phenyl radicals and $R_2$ is the same or a different aliphatic radical containing from 2 to 16 carbon atoms selected from alkyl and alkoxy radicals to produce a transesterification mixture and separating a mixed phosphoric acid ester from alcohols present in the transesterification mixture by vacuum distillation to give an isolated mixture of phosphate esters containing at least 50 weight percent of esters of the formulae:

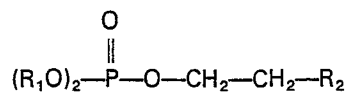 and 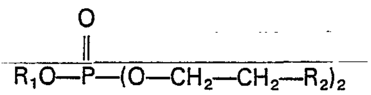

at least 10 weight percent of esters of the formula:

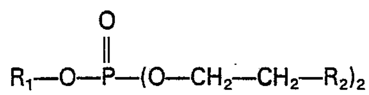

and no more than 4 weight percent of esters of the formula:

$$(R_1O)_3\ P{=}O$$

wherein $R_1$ and $R_2$ have the meanings defined above.

Preferably the distilled phosphate ester mixture contains 15 to 20 weight percent dialkyl aryl phosphate, 65 to 80 weight percent alkyl diaryl phosphate and up to 4 weight percent triaryl phosphate.

It is an advantage of this invention to provide a process for the manufacture of mixed phosphoric acid ester compositions containing at least 10 weight percent of the compound:

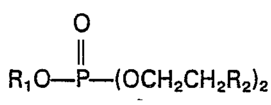

wherein $R_1$ and $R_2$ have the meanings defined above.

It is a further advantage of this invention to provide an improved commercially feasible process for the manufacture of a mixed phosphoric acid ester composition containing substantial amounts of the compounds:

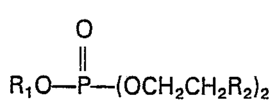 and 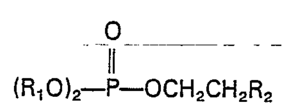

wherein $R_1$ and $R_2$ have the meanings defined above.

It is also an advantage of the present invention to prepare plasticized vinyl chloride polymer compositions characterized by low temperature flexibility, heat and flame resistance and reduced smoke levels.

As stated above, the starting material is a tertiary aromatic ester of phosphoric acid having the formula:

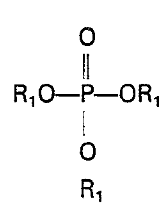

wherein $R_1$ has the meaning defined above. Thus, the starting material may itself be a mixed ester of phosphoric acid such as isopropylphenyl/phenyl phosphate or isobutylphenyl/phenyl phosphate or mixtures of both isopropylphenyl/phenyl phosphate and isobutylphenyl/phenyl phosphate, the preparation of which are described in US—A—3 576 923 (referred to above). The substituents on the phenyl radical of such mixed phosphate ester compositions can be obtained by alkylating phenol, prior to phosphorylation, with olefins such as: ethylene, propylene, butene-1, butene-2, isobutylene, pentene-1, 2-methyl-butene-1, hexene-1, cyclohexene, heptene-1, 2-methyl-pentene-1 (propylene dimer), octene-1, cyclo-octene, nonene-1, decene-1, cyclodecene, undecene-1, dodecene-1, cyclododecene, tetradecene and hexadecene.

The olefin may be a single olefin or a mixture of two or more thereof. Examples of mixture whith are particularly suitable for use as alkylating agents because of their ready availability include caprylene (a mixture of isomeric octenes), propylene trimer (a mixture of isomeric nonenes), propylene tetramer (a mixture of isomeric dodecenes), diisobutylene (a mixture of 2,4,4-trimethylpentene-1 and 2,4,4-trimethylpentene-2), tri-isobutylene (a mixture of dodecene consisting predominantly of 2,4,4,6,6-pentamethylheptene-1), and tetraisobutylene (a mixture of hexadecenes consisting predominantly of 2,4,4,6,6,8,8-heptamethylnonene-1).

The starting material may also be a single pure compound such as for example triphenyl phosphate, tricresyl phosphate or cresyl diphenyl phosphate, or a mixture of such pure compounds.

The alcohol that is employed in the transesterification reaction may be any monohydric aliphatic alcohol that is not substituted on the α or β carbon atoms.

Suitable aliphatic alcohols for use in the transesterification reaction include:

ethoxyethyl alcohol
butyoxyethyl alcohol
iso-octyl alcohol
octyl alcohol
nonyl alcohol
trimethylhexyl alcohol
decyl alcohol
dodecyl alcohol
n-hexoxyethyl alcohol
iso-octoxyethyl alcohol
n-octoxyethyl alcohol
nonoxyethyl alcohol
trimethylhexoxyethyl alcohol
n-decoxyethyl alcohol
dodecoxyethyl alcohol
tridecyl alcohol
tridecoxyethyl alcohol
tetradecyl alcohol
tetradecoxyethyl alcohol
pentadecyl alcohol
pentadecoxyethyl alcohol
hexadecyl alcohol
hexadecoxyethyl alcohol
heptadecyl alcohol
heptadecoxyethyl alcohol
octadecyl alcohol
octadecoxyethyl alcohol

Particularly useful in the practice of the present invention are alcohols having from 6 to 18 carbon atoms and the commercially available alkoxyalcohols such as CELLOSOLVES® having the formula:

$$(C_nH_{2n+1})—O—CH_2—CH_2OH$$

wherein n is an integer from 2 to 16. The higher molecular weight alcohols (above $C_{12}$) produce mixed phosphate esters that are low in volatility but difficult to distill.

Mixturs of any two or more aliphatic alcohols and alkoxyalcohols may also be used in the process of this invention.

It is critical in effecting the transesterification reaction of the present invention that anhydrous conditions be maintained throughout the reaction.

As many of the alcohols employed, and particularly the lower molecular weight alcohols are hygroscopic precautions must be taken that all reactants are thoroughly dry. The presence of moisture has a pronounced effect on the transesterification of esters of phosphoric acid and modifies the composition of the reaction product to an extent that does not occur in the alcoholysis of esters derived from organic acids.

The relative proportions of the phosphate ester and the alcohol present in the reaction mixture may vary widely and will depend upon the degree of substitution desired during the transesterification reaction. In general, the degree of substitution of the alcohol and alkoxyalcohol radicals for other radicals present in

the starting phosphate ester will be related to the amount of alcohol present in the reaction mixture and will increase as the relative amount of alcohol is increased. Desirably the mole ratio of alcohol to tertiary phosphate ester will vary from about 0.5:1 to about 10:1.

The process of the present invention is catalyzed by catalytic amounts of sodium. It is suspected that the reaction may be promoted by sodium alkoxide that is formed *in situ*. However, sodium alkoxide that is prepared externally of the reactor and then added to the reaction mixture in catalytic amounts has been found to be much less effective.

It is an advantage of the process of the present invention that transesterification occurs rapidly at relatively low temperatures, i.e., up to about 100°C. However, temperatures of up to 70°C are preferred to avoid ether formation, with temperatures in the range of 60°C—70°C being most preferred. Earlier investigators have found it necessary to heat the reaction mixture to much higher temperatures (130°C—170°C) and for longer periods of time (4—9 hours) to effect the transesterification of aryl phosphate esters. By way of contrast, the transesterification reaction herein described occurs within the first 15 minutes and usually reaches equilibrium in about 4 hours at 60°C—70°C to produce a reaction product containing substantial quantities, i.e., more than 50 mole percent of the mono- and di-substituted phosphate esters. The starting triaryl phosphate esters, i.e. not more than 4 weight percent and the trialkyl substituted phosphate ester may also be present in the reaction mixture as well as other phosphate esters.

It is another advantage of the process of the present invention that the formation of ethers which generally occurs during the transesterification of phosphate ester is minimized.

In accordance with the present invention, the mixed esters of phosphoric acid that are formed during the transesterification process are separated from the reaction mixture by vacuum distillation. This is a most important improvement over other known commercial methods of preparing phosphoric acid esters, such as the alkyldiaryl phosphate esters described in US—A—2 504 121. That method, which reacts an alkyl phosphoryl dichloride with a sodium phosphate solution washes the ester product with water. The water washing step is quite expensive since the wash water must be treated prior to discarding it to avoid environmental problems.

The process of the present invention provides a commercially feasible method for the manufacture of novel mixed phosphoric acid ester compositions that are stable and may be heated to elevated temperatures during processing. One such mixed phosphoric acid ester composition to be described below is a clear liquid at room temperature that contains about 78 weight percent isodecyl diphenyl phosphate 15—20 weight percent of phenyl diisodecyl phosphate and 4 weight percent triphenyl phosphate.

Such a mixed phosphoric acid ester composition, that may be prepared by the process of the present invention from a mixed isopropylphenyl/phenyl phosphate and butoxyethanol, may contain different phosphate esters having the formulae:

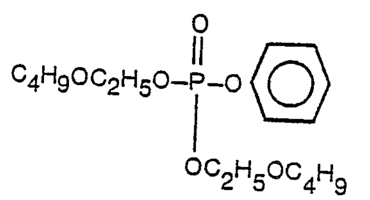

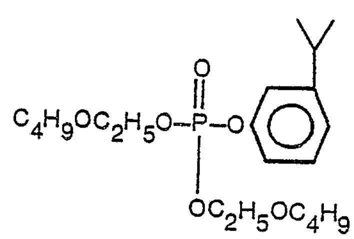

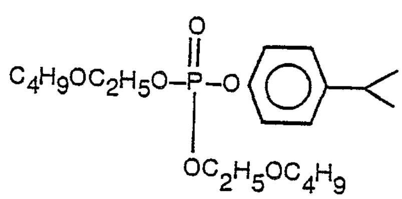

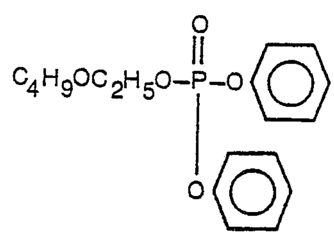

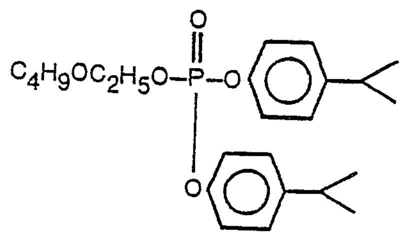

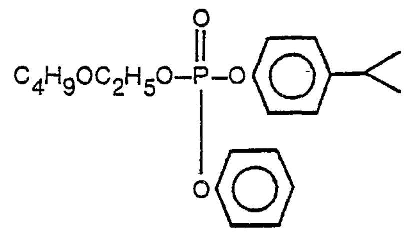

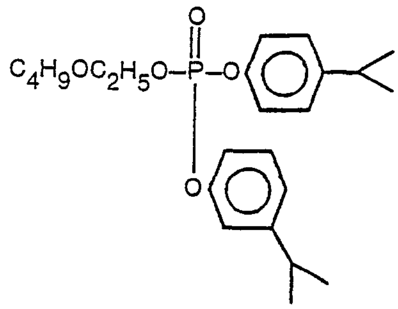

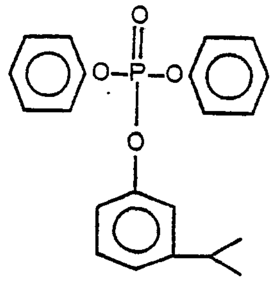

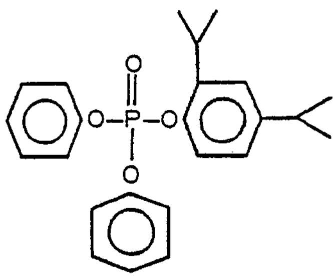

The above compounds are listed to present some of the many possibilities and it will be understood that other species not specifically described will be present depending upon the complexity of the mixed isopropylphenyl/phenyl phosphate starting material.

It will be understood that the novel mixed phosphoric acid ester compositions described and claimed herein may be made by reacting one or more of the aforesaid aliphatic alcohols or alkoxyalcohols with any of the aforesaid triaryl phosphoric acid esters or mixture of such phosphoric acid esters.

An illustration of Applicants' novel mixture that contains only four phosphate esters encompassed by the above formula would be a mixed phosphoric acid ester composition containing substantial amounts of the following phosphate esters:

tris butoxyethyl phosphate,
di-butoxyethyl phenyl phosphate,
butoxyethyl diphenyl phosphate, and
triphenyl phosphate.

It is characteristic of Applicants' process that the dibutoxyethyl phenyl phosphate is present in amounts of at least 10 weight percent.

Such a composition has been found to be particularly advantageous as a plasticizer for polyvinyl chloride polyners particularly when heat resistance to milling and processing is desired of the plasticized polyvinyl chloride.

We have discovered that the novel mixed phosphoric acid ester composition of the present invention has a satisfactory viscosity range and is useful as a plasticizer for polyvinyl chloride polymers and copolymers of vinyl chloride with not more than 20% of monomer other than vinyl chloride, for example, vinylidene chloride and/or acrylonitrile. Such mixed phosphoric acid ester compositions in amounts of from 30 to 150 parts per 100 parts of polymer impart to the polyvinyl chloride polymer not only low temperature flexibility and fire resistance but also stability at the elevated temperatures of extrusion i.e., 180°C—200°C. Particularly preferred plasticizers for polyvinyl chloride polymers to be used in wire coating application are the mixed alkoxyalkyl, phenyl and substituted phenyl phosphates. The plasticized polyvinyl chloride polymer may, of course, also comprise other conventional additives, particularly one or more heat or light stabilizers and/or antioxidants. The unexpected heat stability during the molding process of polyvinyl chloride resins that are plasticized with the phosphoric acid mixed esters of the present invention is not understood.

It is believed that stability of the plasticized polyvinyl chloride resin at elevated temperatures is a reflection of the compatibility of the mixed phosphoric acid ester plasticizers of the present invention with stabilizers present in the resin composition. Stabilizers are added to polyvinyl chloride compositions and perform the function of protecting the polyvinyl chloride resin from decomposition when subjected to a high energy source, principally thermal energy, although light and other radiant energy can exercise similar degradative effects.

Although there is not universal agreement regarding the various mechanisms of stabilization, it is generally accepted that the chemistry responsible for instability involves dehydrochlorination of vinyl chloride polymer chains. Once initiated in a polymer chain, the reaction becomes autocatalytic giveing rise to large quantities of corrosive hydrogen chloride and leaving a highly unsaturated polymer residue. Double bonds in this residue tend to be conjugated because of the heat to tail nature of the vinyl

polymerization placing chlorine atoms on alternating carbon atoms of the backbone chain. The resulting conjugated polymer undergoes further reaction including crosslinking and cyclization of aromatic residues, many of the products being colored chromophores. In fact, the first evidence of instability in polyvinyl chloride compositions is usually seen by discoloration to yellow then brown and ultimately black.

To retard or delay this decomposition of the vinyl polymer during high temperature processing, including compounding, extrusion or molding, stabilizers are used in the compound formulation. Three general types of stabilizers are employed.

1) Organometallic derivatives of metals such as Ba, Cd, Zn, Sn, Ca and Pb. Typically these are simple soaps of fatty acids because of the relatively low costs of such derivatives. Presumably, these function as bases to absorb initially released HCl and suppress autocatalytic influence of the acid on further dehydrohalogenation.

2) Epoxidized aliphatics and glycidyl aromatics which function similarly to the metal bases by absorbing released HCl.

3) Antioxidant materials such as phosphites.

The mechanism is unknown but may involve suppression of radical reactions.

One or more of these stabilizers are found as additives in essentially all vinyl formulations. In unfilled, unplasticized vinyl formulations, they may constitute the largest volume additive and are usually at least the second largest in plasticized vinyls. Unlike most plasticizers which are designed to permit maximum compatibility (solubility) with the vinyl resin, stabilizer additives or products derived from them by acting on the vinyl resin decomposition products, possess only limited solubility in the resin matrix. Hence, they tend to migrate from the resin especially during high temperature processing.

Epoxy compounds, especially those containing two or more oxirane groups, probably polymerize to less soluble polymeric materials which, in any event, have a high affinity for the metal surfaces found for example in molds, mills and extruders. Metal soaps of fatty acids (e.g., Ba, Cd stabilizers) more closely resemble mold lubricants, that is, materials which migrate to mold surfaces, than do the additives such as plasticizers which are truly compatible with the resin. Hence, such additives along with any other materials of limited compatibility such as for example fillers, coupling agents, glass finishes, organic pigments and waxes, tend to collect on surfaces and under certain conditions lead to the phenomenon known as "plate-out".

When "plate-out" occurs on molds, surfaces of parts are adversely affected — low gloss, and loss of detail, also parts may stick due to the mold fouling or scumming. If severe, molding operations must be shut down to permit cleaning; frequently a costly and time consuming operation in an intricate mold. Surfaces of calendering rolls may be similarly coated with "plate-out". An especially objectionable manifestation of "plate-out" may also be found in extruders where build up may go undetected until suddenly uncontrollable resin decomposition occurs as a result of increased heat of shearing, necessitating a complete shut down of production and costly cleaning of the disassembled equipment.

The extrusion of plasticized polyvinyl chloride resin compositions at elevated temperatures in the range of 180°C—200°C may, therefore, result in decomposition that is related to the amount and type of stabilizer present. Thermal decomposition may occur in the presence of substantial amounts (6—9 parts per hundred) of one or more stabilizers such as for example cadmium, barium or tin salts or epoxy compounds.

Decomposition is a particular problem in the manufacture of coated wire that is made by extruding around one or more conductive cores a polyvinyl chloride resin which is plasticized with an alkyl diphenyl phosphate such as octyl diphenyl phosphate. Substitution of other known aryl phosphate plasticizers for the octyl diphenyl phosphate to reduce decomposition at elevated temperatures results in less than satisfactory low temperature flexibility.

Decomposition of plasticized polyvinyl chloride resin compositions within the extruder at elevated temperatures results in rapid "plating out" of carbon and metallic salts on the screw and die of the extruder and requires excessive downtime. The extruder, which normally might be disassembled and cleaned once a week may become inoperative in less than 8 hours with the result that production comes to a standstill.

Although "plate-out" is a fairly common problem, we have now discovered that decomposition at extrusion temperatures, and the attendant problems caused thereby, can be avoided by employing as a plasticizer the mixed phosphoric acid ester compositions of the present invention. The differential scanning colorometer shows that the mixed phosphate esters of the present invention have a thermal stability at least 50°C above similar compositions which have a substituent on the β-carbon atom of the alkyl or alkoxy radical.

It is an advantage of using the mixed phosphoric acid ester composition of the present invention to plasticize polyvinyl chloride polymers that such ester compositions provide the multiple function of plasticization, flame retardance and suppression of "plate-out" in a single highly effective additive.

As an added advantage, the mixed phosphoric acid ester compositions of the instant invention yield plasticized vinyl polymers which produce low smoke values during combustion and in this respect they match the performance of alkyl phosphates. Increasing attention has been placed on the amount of smoke generated by polyvinyl chloride polymers, especially fire retardant polyvinyl chloride polymers. It is evident that even a polyvinyl chloride resin formulation having a low degree of fire hazard may create a hazard if the smoke released when the polyvinyl chloride polymer is in contact with a flame is sufficient to

trap occupants in an enclosed space by obscuring their vision or hampering their ability to breath. The underwriter's laboratory has developed tests and ratings for measuring smoke evolution (see U.L. E—84 Tunnel Tests and also U.L. 72).

It has been found that the novel mixed phosphoric acid ester compositions, when incorporated into a polyvinyl chloride polymer formulation in compatible amounts of 30 to 150 parts per hundred give good low temperature flexibility, increase the oxygen index, reduces flame spread and most important, reduce the amount of smoke generated without substantially detracting from the polyvinyl chloride polymer properties.

The practice of our invention will be better understood by reference to the following Example which is presented for the purpose of illustration. In the Example that follows, parts by weight bear the same relation to parts by volume as do kilograms to liters. Parts and percentages are expressed by weight unless otherwise indicated.

## Example

Preparation of isodecyl substituted triphenyl phosphate mixed esters

An isodecyl phenyl phosphate mixed ester is obtained by reacting 1,000 parts of triphenyl phosphate, 1,000 parts of isodecanol for 6 hours. The alcohol is a by-product of the petroleum industry obtained from Exxon Chemical Company, Houston, Texas), having the following technical specifications:

| | |
|---|---|
| Acidity, as acetic acid (wt. percent) max. | 0.001 |
| Appearance | Clear and free of suspended matter |
| Carbonyl number (mg KOH/g) max | 0.20 |
| Color (Pt-Co) max | 10 |
| Distillation (°C) | |
| Initial min. | 215 |
| Dry point max. | 223 |
| Purity (wt. percent) min. | 99.0 |
| Specific gravity (20/20°C) max. | 0.840 |
| Specific gravity (20/20°C) min. | 0.835 |
| Water (wt. percent) max. | 0.1 |

This product is represented to be a mixture of isomeric $C_{10}$ alcohols that are substantially free of substitution on the α and β-carbon atoms.

The mixture of triphenyl phosphate and alcohol are heated to a temperature of 70°C and 10 parts of sodium are added. The mixture is stirred under anhydrous conditions for 6 hours while maintaining the temperature at 70°C.

At the end of 6 hours, the reaction product is distilled to give 988 parts of a clear liquid, b.p. 221°C—231°C/3 mm (399.966 $Nm^{-2}$). The yield of mixed ester is 840 parts, 85% based on the starting reactants. The distillation analyses 78% isodecyl diphenyl phosphate, 15% diisodecyl phenyl phosphate, and 4.0% triphenyl phosphate.

Fifty parts of the distilled decylphenyl phosphate described above is milled with 100 parts of polyvinyl chloride resin, 6 parts of an epoxide heat stabilizer, 3 parts of a barium-cadmium heat stabilizer, 0.25 parts of an ultraviolet stabilizer and 0.6 parts of a mold release agent. The plasticized polyvinyl chloride resin had the following physical properties:

| | |
|---|---|
| Modulus at 100% elongation[1] | 1137 psi (7.84 MPa) |
| Percent Elongation at break[1] | 415 |
| Tensile Strength, psi (MPa)[1] | 2588 (17.844) |
| Shore A Hardness[2] | 78 |
| Oxygen Index[3] | 26.2 |
| Smoke density per mil[4] | 9.8 |

| | |
|---|---|
| Smoke density per gram[4] | 59 |
| Low temperature brittleness[5] | 29.4 |
| LT torsional stiffness[6] | |
| E at −10°C (PSI) | 32 |
| G at −20°C | 10.7 |
| E at −20°C | 97 |
| G at −20°C | 32.3 |
| TF (°C) | −23.7 |
| T4 (°C) | 0 |
| Stiffness Mod. (PSI)[7] | 1168 |

[1] — ASTM D—412
[2] — ASTM D—2240
[3] — ASTM D—2863
[4] — Smoke values are determined by the National Bureau of Standards Method (See NBS Technical Note 757, January 1973).
[5] — ASTM D—746
[6] — ASTM D—1043
[7] — ASTM D—747

The mixed phosphate esters described above have aryl and alkyl groups that are attached to phosphorus through an oxygen atom and are further characterised by lack of substitution on the α and β carbon atoms of the aliphatic substituent. Applicants have discovered that such compositions are more stable at higher temperatures than the related isomers which do not contain α and/or β aliphatic substituents and offer important advantages in plasticizers and functional fluids that are to be used at elevated temperatures. The products of the present invention, for example, may be used as a plasticizer for a polyvinyl chloride that is to be extruded at normal elevated temperatures (i.e., 190°C to 205°C) and will reduce the necessity to frequently dismantle and clean the extruder equipment during use.

**Claims**

1. A process for the manufacture of a mixed phosphoric acid ester composition characterized by reacting in an anhydrous system at a temperature of up to 100°C and in the presence of a catalytic amount of sodium, an ester of phosphoric acid having the formula:

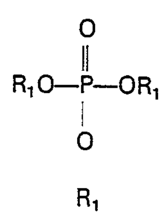

with an aliphatic alcohol having the formula $R_2CH_2CH_2OH$ wherein $R_1$ may be the same or a different radical selected from phenyl radicals and substituted phenyl radicals and $R_2$ is the same or a different aliphatic radical containing from 2 to 16 carbon atoms selected from alkyl and alkoxy radicals to produce a transesterification mixture and separating a mixed phosphoric acid ester from alcohols present in the transesterification mixture by vacuum distillation to give an isolated mixture of phosphate esters containing at least 50 weight percent of esters of the formula:

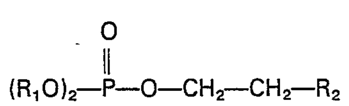 and 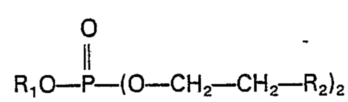

at least 10 weight percent of esters of the formula:

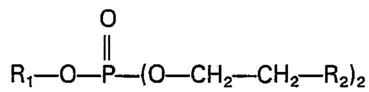

and no more than 4 weight percent of esters of the formula:

$$(R_1O)_3\ P{=}O$$

wherein $R_1$ and $R_2$ have the meanings defined above.

2. A process as claimed in claim 1 characterized in that $R_1$ is selected from phenyl, tert.-butylphenyl and isopropylphenyl radicals and $R_2$ is selected from ethyl, n-octyl, isooctyl, ethoxy and butyoxy radicals.

3. A process as claimed in claim 1 characterized in that $R_1$ is phenyl and $R_2$ is isooctyl.

4. A plasticized flexible resin material characterised by a vinyl chloride polymer and a mixed phosphoric acid ester plasticizer therefor, said mixed phosphoric acid ester having been produced by the process claimed in any of claims 1 to 3, the amount of said mixed phosphoric acid ester being from 30 to 150 parts by weight per 100 parts by weight of the vinyl chloride polymer.

**Patentansprüche**

1. Verfahren zur Herstellung einer gemischten Phosphorsäureesterzusammensetzung, dadurch gekennzeichnet, daß man in einem wasserfreiem System bei einer Temperatur bis zu 100°C und in Anwesenheit einer katalytischen Menge Natrium einer Ester der Phosphorsäure mit der Formel

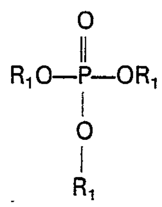

mit einem aliphatischen Alkohol der Formel $R_2CH_2CH_2OH$ worin $R_1$ der gleiche oder ein unterschiedlicher Rest, ausgewählt aus Phenylresten und substituierten Phenylresten, sein kann, und $R_2$ der gleiche oder ein unterschiedlicher aliphatischer Rest mit 2 bis 16 Kohlenstoffatomen, ausgewählt aus Alkyl- und Alkoxyresten, sein kann, zur Bildung einer Umesterungsmischung umsetzt und einen gemischten Phosphorsäureester von den in der Umesterungsmischung anwesenden Alkoholen durch Vakuumdestillation abtrennt, um eine isolierte Mischung von Phosphatestern zu erhalten, die mindestens 50 Gew.-% Ester der Formel:

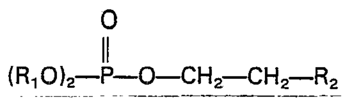 und 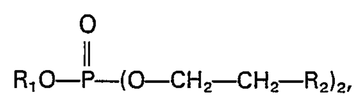,

mindestens 10 Gew.-% Ester der Formel

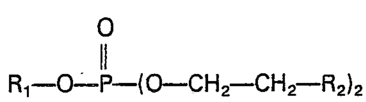

und nicht mehr als 4 Gew.-% Ester der Formel

$$(R_1O)_3\ P{=}O$$

worin $R_1$ und $R_2$ die oben definierte Bedeutung haben, enthält.

2. Verfahren nach Anspruch 1, dadurch gekennzeichnet, daß $R_1$ aus Phenyl-, tert-Butylphenyl- und Isopropylphenylresten aus $R_2$ aus Ethyl-, n-Octyl-, Isooctyl-, Ethoxy- und Butoxyresten ausgewählt sind.

3. Verfahren nach Anspruch 1, dadurch gekennzeichnet, daß $R_1$ Phenyl und $R_2$ Isooctyl ist.

4. Plastifiziertes biegsames Harzmaterial, gekennzeichnet durch ein Vinylchloridpolymer und einen gemischten Phosphorsäureesterweichmacher dafür, wobei der gemischte Phosphorsäureester nach dem Verfahren gemäß einem der Ansprüche 1 bis 3 hergestellt ist und die Menge des gemischten Phosphorsäureesters 30 bis 150 Gew.-Teile je 100 Teile des Vinylchloridpolymers beträgt.

**Revendications**

1. Procédé pour la préparation d'une composition à base de mélanges d'esters d'acide phosphorique, caractérisé en ce qu'on fait réagir dans un système anhydre, à une température jusqu'à 100°C et en présence d'une quantité catalytique de sodium, un ester de l'acide phosphorique répondant à la formule:

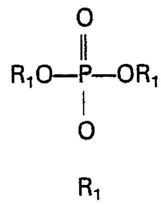

avec un alcool aliphatique répondant à la formule $R_2CH_2CH_2OH$ où $R_1$ peut être un radical identique ou différent choisi parmi des radicaux phényle et des radicaux phényle substitués et $R_2$ est un radical aliphatique identique ou différent contenant de 2 à 16 atomes de carbone, choisi parmi les radicaux alkyle et alcoxy, pour produire un mélange de transestérification, et en ce qu'on sépare un ester phosphorique mixte des alcools présents dans le mélange de transestérification par distillation sous vide pour donner un mélange isolé d'esters phosphoriques contenant un moins 50% en poids d'esters répondant à la formule:

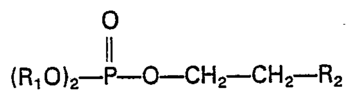 et 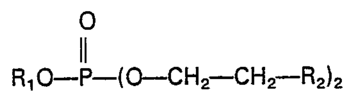

au moins 10% en poids d'esters répondant à la formule:

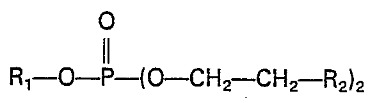

et pas plus de 4% en poids d'esters répondant à la formule:

$$(R_1O)_3\,P=O$$

dans laquelle $R_1$ et $R_2$ ont les significations indiquées ci-dessus.

2. Procédé suivant la revendication 1, caractérisé en ce que $R_1$ est choisi parmi les radicaux phényle, tert-butylphényle et isopropylphényle et en ce que $R_2$ est choisi parmi les radicaux éthyle, n-octyle, isooctyle, éthoxy et butoxy.

3. Procédé suivant la revendication 1, caractérisé en ce que $R_1$ est un radical phényle et $R_2$ est un radical isooctyle.

4. Matière résineuse souple plastifiée, caractérisée par un polymère du chlorure de vinyle et un ester phosphorique mixte comme plastifiant pour celui-ci, cet ester phosphorique mixte ayant été préparé par le procédé suivant l'une quelconque des revendications 1 à 3, la proportion de cet ester d'acide phosphorique mixte étant de 30 à 150 parties en poids pour 100 parties du polymère du chlorure de vinyle.